# EUROPÄISCHE PATENTSCHRIFT

(11) **EP 0 899 181 B1**
(45) Veröffentlichungstag und Bekanntmachung des Hinweises auf die Patenterteilung: **01.10.2003**
(21) Anmeldenummer: 98113990.0
(22) Anmeldetag: 27.07.1998
(51) Int. Cl.: B62D 7/18, F16C 33/80

(54) **Vorderachse eines Lastkraftwagen oder Omnibus mit lenkbaren, nichtangetriebenen Rädern**
Front axle for a truck or bus with steerable non-driving wheels
Essieu avant pour un camion ou autobus à roues non motrices directrices

(30) Priorität: 01.09.1997 DE 19738113
(43) Veröffentlichungstag der Anmeldung: 03.03.1999
(60) Teilanmeldung: 00112649.9
(73) Patentinhaber: MAN Nutzfahrzeuge Aktiengesellschaft, 80976 München (DE)
(72) Erfinder: Diehl, Ernst-Ludwig, Dipl.-Ing., 81247 München (DE); Greinöcker, Wolfgang, Dipl.-Ing. (FH), 85551 Kirchheim (DE)

(56) Entgegenhaltungen:
- WO-A-97/13674
- DE-A- 2 751 704

## Beschreibung

Die Erfindung betrifft eine Vorderachse eines Lastkraftwagen oder Omnibus mit Merkmalen entsprechend dem Oberbegriff des Anspruchs 1. Diese ist in WO-9 713 674 offenbart.

Bei gebauten Vorderachsen von schweren Serien-Nutzfahrzeugen mit Merkmalen der gattungsgemäßen Art stellt sich das Problem, daß die Achsschenkel-/Achsschenkelbolzenlagerung aufgrund der gegebenen Konstruktion nicht wartungsfrei ist, sondern nach einer bestimmten Fahrzeit bzw. Kilometerleistung des Fahrzeugs gezielt überprüft und nachgeschmiert werden muß. Falls dieses Nachschmieren unterlassen oder vergessen wird, können Lagerschäden auftreten. Dies kann sogar soweit führen, daß ganze Lagerbaugruppen ausgewechselt werden müssen.

Es ist daher Aufgabe der Erfindung, eine Vorderachse der gattungsgemäßen Art mit einer solchen Achsschenkel-/Achsschenkelbolzenlagerung auszustatten, die ohne Nachschmierung eine extrem hohe Fahrzeit bzw. Kilometerleistung ohne Schaden zu nehmen ermöglicht.

Diese Aufgabe ist bei einer Vorderachse der gattungsgemäßen Art erfindungsgemäß durch das Vorsehen einer wartungsfreien Achsschenkel-/Achsschenkelbolzenlagerung mit Merkmalen entsprechend dem Kennzeichen des Anspruchs 1 gelöst.

Vorteilhafte Weiterbildungen bzw. Details der erfindungsgemäßen Lösung sind in den Unteransprüchen angegeben.

Dadurch, daß das Nadellager der unteren Lagerstelle, vorzugsweise aber auch das Nadellager der oberen Lagerstelle in einer topfförmig ausgebildeten Hülse aufgenommen ist, die mit ihrem Boden jeweils die benachbarte, äußere Stirnfläche des Achsschenkelbolzens überdeckt, ist wirksam jegliches Vordringen von Schmutz und Wasser von axial außen her zu den Nadellagern und deren Laufflächen am Achsschenkelbolzen verhindert. Da außerdem der Innenraum der Hülse der unteren Lagerstelle, vorzugsweise auch der Innenraum der Hülse der oberen Lagerstelle durch wenigstens ein Dichtungsorgan zum Achskörper hin abgedichtet ist, wird auch einem radialen Vordringen von Schmutz und Wasser zwischen den parallelen Kontaktflächen des Achskörpers und Achsschenkel-Maules wirksam vorgebeugt. Da somit der Innenraum jeder Lagerstelle hermetisch nach außen abgeschottet ist, genügt es, diesen Lagerinnenraum bzw. die dort gegebenen Freiräume nach dem Zusammenbau der Achse einmal mit Schmierfett auszufüllen. Dieses behält, weil es nicht verunreinigt werden kann, über die gewünschte Standzeit oder gar die gesamte Lebensdauer des Fahrzeugs seine volle Schmierwirkung, mit der Folge, daß die Achsschenkel-/Achsschenkelbolzenlagerung praktisch über die gesamte Standzeit ihren hohen Lagerungsstandard beibehält.

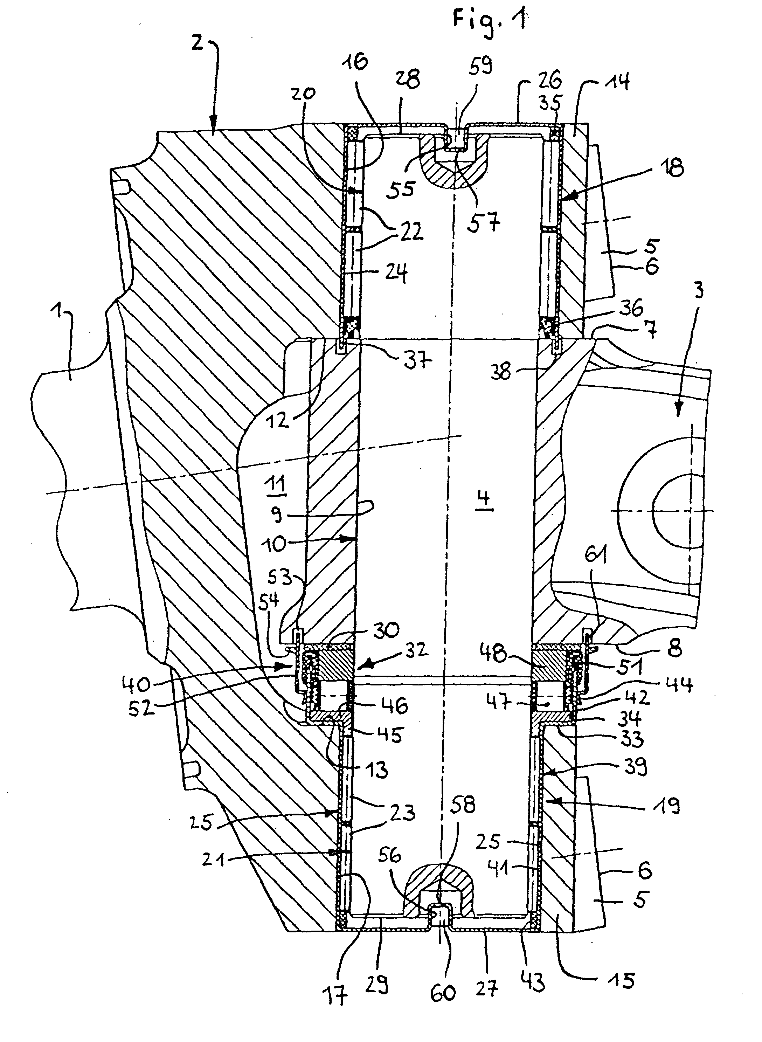

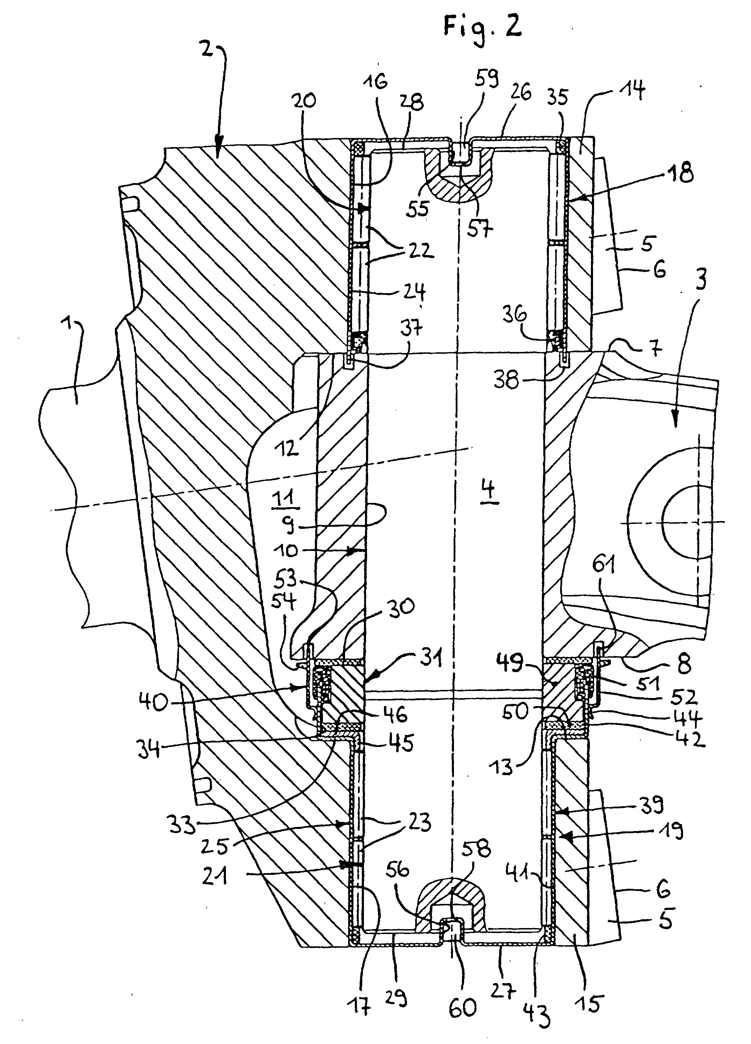

Nachfolgend ist die erfindungsgemäße Lösung anhand zweier in Fig. 1 und 2 der Zeichnung dargestellter Ausführungsbeispiele noch näher erläutert. Dabei sind in den beiden Figuren gleiche bzw. einander entsprechende Bauteile mit gleichem Bezugszeichen angezogen und von der Vorderachse eines schweren Lastkraftwagen jeglicher Bau- und Einsatzart oder eines Omnibusses nur jene Abschnitte dargestellt, die für das Verständnis der Erfindung erforderlich sind.

Die lenkbaren, nichtangetriebenen (nicht dargestellten) Räder der Vorderachse sind auf Lagerzapfen 1 von Achsschenkeln 2 gelagert, die am starren Achskörper 3 schwenkbar über Achsschenkelbolzen 4 angelenkt sind. An den Achsschenkeln 2 sind an geeigneten Stellen Mittel, wie Vorsprünge 5 mit Anschlußflächen 6, vorgesehen, an denen Lenkungsorgane angeschlossen sind (nicht dargestellt), mit denen die Lenkbewegung vom Lenkrad des Fahrzeugs mittelbar auf die Achsschenkel 2 übertragbar ist.

Der starre Achskörper 3 weist an jedem seiner beiden Enden eine obere Stützfläche 7, eine hierzu parallele untere Stützfläche 8 sowie eine hierzu senkrecht stehende Durchgangsbohrung 9 auf, in die ein Achsschenkelbolzen 4 mit seinem Mittelabschnitt 10 eingepaßt ist. Der Achsschenkel 2 weist ein Maul 11 auf, das oben durch eine ebene Fläche 12 und unten durch eine hierzu parallele Fläche 13 begrenzt wird und in das der Achskörper 3 hineinragt. Außerdem sind im Achsschenkel 2 in den beiderseits des Maules 11 vorhandenen Abschnitten 14, 15 axial zueinander fluchtende sowie senkrecht zu den Flächen 12, 13 stehende Lagerbohrungen 16, 17 gegeben, in deren jeweiligem Bereich die obere Lagerstelle 16 bzw. untere Lagerstelle 17 für den darin mit seinem oberen Zapfenabschnitt 20 bzw. unteren Zapfenabschnitt 21 gelagerten Achsschenkelbolzen 4 angeordnet ist.

Die beiden Lagerstellen 18, 19 je Achsschenkel 2 bzw. Achsschenkelbolzen 4 sind erfindungsgemäß für wartungsfreien Betrieb ausgelegt und weisen jeweils ein insbesondere zweireihiges Nadellager 22 bzw. 23 auf, das von einer äußeren Hülse 24 bzw. 25 umfaßt wird, die in die betreffende Lagerbohrung 16 bzw. 17 des Achsschenkels 2 angepaßt ist.

Jede der beiden Hülsen 24 bzw. 25 ist topfförmig ausgebildet und überdeckt mit ihrem Boden 26 bzw. 27 die benachbarte Stinfläche 28 bzw. 29 des Achsschenkelbolzens 4.

In Anbaulage übergreift der Achsschenkel 2 mit seinem Maul 11 den endseitigen Anschlußbereich des Achskörpers 3, wobei dieser mit seiner oberen Stirnfläche 7 in Gleitkontakt mit der oberen Begrenzungsfläche 17 des Mauls 11 steht und mit seiner unteren Stützfläche 8 unter Zwischenschaltung wenigstens einer Axialtoleranzen ausgleichenden Paßringscheibe 30 sowie eines Axialgleitlagers 31 (Fig. 2) oder Axialrollenlagers 32 (Fig. 1) und dem Boden 33 einer dieses Lager 31 bzw. 32 aufnehmenden Erweiterung 34 der topfförmigen Hülse 25 der unteren Lagerstelle 19 an der unteren Begrenzungsfläche 13 des Mauls 11 am Achsschenkel 2 abgestützt ist.

Die topfförmige Hülse 24 der oberen Lagerstelle 18 ist vorzugsweise durch ein einstückiges Tiefziehteil aus Stahlblech realisiert, das an bestimmten Stellen - soweit notwendig - spanabhebend nachbearbeitet ist. Der Boden 26 dieser Hülse 24 ist in Einbaulage um ein gewisses Maß, z. B. 1 bis 2 mm, von der benachbarten Stirnfläche 28 des Achsschenkelbolzens 4 beabstandet, wobei diese Distanz durch einen sich an der oberen Reihe von Rollen des Nadellagers 22 und innenseitig des Hülsen-Bodens 26 abstützenden Distanzring 35 erhalten bleibt.

Mit 36 ist eine den Innenraum der Hülse 24 der oberen Lagerstelle 18 zum Achskörper 3 hin abdichtende Gummilippendichtung bzeichnet, die durch eine Metalleinlage armiert ist und sich im Anschluß an die untere Reihe von Rollen des Nadellagers 22 mit ihren Dichtlippen dichtend an die zylindrische Innenfläche der Hülse 24, die Außenfläche des oberen Zapfenabschnitts 20 des Achsschenkelbolzens 4 und die obere Stützfläche 7 am Achskörper 3 anlegt. Darüber hinaus ist der Innenraum der oberen Lagerstelle 18 auch noch durch eine Labyrinthdichtung abgedichtet. Diese ist dadurch realisiert, daß die topfförmige Hülse 24 mit ihrem unteren Randbereich 37 in den Bereich des Achsschenkel-Maules 11 hinein verlängert ist und dort in eine die obere Stützfläche 7 des Achskörpers 3 axial hinterschneidende Ringnut 38 eintaucht. Diese ist so groß bemessen ist, daß sie den eintauchenden Randbereich 37 der Hülse 24 innen, außen und stirnseitig mit Abstand umgibt und so ein Ringkanal mit einem nach oben offenen U-Querschnitt verbleibt, der das dichtende Labyrinth bildet.

Die Hülse 25 der unteren Lagerstelle 19 ist erfindungsgemäß aus zwei Teilen 39 und 40 zusammengesetzt. Das erste topfförmige Teil 39 mit dem Boden 27, einer zylinderischen Wand 41 und der Erweiterung 34 mit Boden 33 und zylindrischer Außenwand 42 ist einstückig, vorzugsweise durch ein Tiefziehteil aus Stahlblech, realisiert, das - soweit notwendig - an bestimmten Stellen spanabhebend nachbearbeitet ist. Der an diesem ersten Hülsen-Teil 39 gegebene Boden 27 der Hülse 25 ist in Einbaulage um ein gewisses Maß, z. B. 1 bis 2 mm, von der benachbarten Stirnfläche 29 des Achsschenkelbolzens 4 beabstandet, wobei dieser Abstand sich aus der Länge der zylindrischen Außenwand 41 zwischen den Böden 33 und 27 sowie einen Distanzring 43 ergibt, der sich zwischen der unteren Reihe von Rollen des Nadellagers 23 und der Innenseite des Bodens 27 erstreckt. Das zweite Teil der Hülse 25 ist durch eine bspw. aus Kunststoff, vorzugsweise jedoch ebenfalls aus Stahlblech durch Tiefziehen hergestellte Schiebemuffe 40 gebildet, die mit einem zylindrischen Führungsabschnitt 44 mit Friktion auf der zylindrischen Außenwand 42 der Erweiterung 34 sitzt und längs derselben verschiebbar ist.

Innerhalb der unteren Lagerstelle 19 sind die beiden Reihen von Rollen des Nadellagers 23 zwischen dem unteren Distanzring 43 und dem Axialringbund 45 einer Lagerringscheibe 46 aufgenommen. Diese bildet gemäß Fig. 2 ein Teil des Axialgleitlagers 31 und gemäß Fig. 1 ein Teil des Axialrollenlagers 32. Letzteres weist Zylinder- oder Kegelrollen 47 auf, die zwischen der Lagerringscheibe 46 und einer weiteren Lagerringscheibe 48 aufgenommen sind. Das Axialgleitlager 31 gemäß Fig. 2 dagegen besteht aus einem Druckring 49, der sich gleitfähig auf einer Lagerringscheibe 50 und über diese auf der Lagerringscheibe 46 abstützt. Auf der Oberseite des jeweiligen Lagers 31 bzw. 32 ist der Achskörper 3 unter Zwischenschaltung der wenigstens einen Paßringscheibe 30 abgestützt.

Der Innenraum der Hülse 25 der unteren Lagerstelle 19 ist zum Achskörper 3 hin, wie folgt dargestellt, abgedichtet. Zum einen ist eine Gummilippendichtung 51 vorgesehen, die den oberen freien Rand der zylindrischen Außenwand 42 der Erweiterung 34 am ersten Teil 39 der Hülse 25 umgreift und mit ihren Dichtlippen den Innenraum der Hülse 25 sowie das Axialgleit- oder -rollenlager 31 bzw. 32 zu der Paßringscheibe 30 oder der unteren Stützfläche 8 am Achskörper 3 hin abdichtet. Die zum anderen vorgesehene Labyrinthdichtung ist dadurch realisiert, daß der obere freie Endbereich des ersten Teils 39 der Hülse 25 einschließlich der Gummilippendichtung 51 von der das zweite Hülsenteil bildenden Schiebemuffe 40 übergriffen wird und diese mit dem oberen Endabschnitt 61 ihrer zylindrischen Außenwand 52 in den Bereich des Achsschenkel-Mauls 11 hinein verlängert ist und dort in eine Ringnut 53 eintaucht, die im Achskörper 3, dessen untere Stützfläche 8 axial hinterschneidend, eingearbeitet ist. Diese Ringnut 53 übergreift den eintauchenden Randbereich 61 der Schiebemuffe 40 innen, außen und stirnseitig mit solchem Abstand, daß sich ein Ringkanal mit einem nach unten offenen U-Querschnitt ergibt, der das dichtende Labyrinth bildet. An der Schiebemuffe 40 kann außen ein umlaufender Ringvorsprung 54 vorgesehen sein, der als Anschlag fungiert und mit der unteren Achskörper-Stützfläche 8 zusammenwirkend die axiale Eindringtiefe der Schiebemuffe 40 in die Ringnut 53 begrenzt.

Die Schiebemuffe 40 wird bei der Montage des Achsschenkels 2 und Achsschenkelbolzens 4 zunächst in eine nach unten geschobene Vormontageposition gebracht, in der sie noch nicht in die Ringnut 53 eintaucht, sondern mit ihrem oberen Rand 61 ein gewisses Maß von der unteren Achskörper-Stützfläche 8 beabstandet ist. Dadurch ist es möglich, wenn das Axialgleit- bzw. -rollenlager 31 bzw. 32 sich in Endeinbaulage befindet, den toleranzbedingten Spalt zwischen Lageroberseite und unterer Achskörper-Stützfläche 8 mit einer gegebenenfalls aus mehreren Einzelscheiben zusammengesetzten Paßringscheibe 30 auszufüllen, deren Dicke sich aus der meßtechnisch festgestellten Spalthöhe ergibt. Am Ende der Montagemaßnahmen wird die Schiebemuffe 40 in ihre Labyrinthdichtungs-Funktionslage, also eingetaucht in die Ringnut 53, verschoben.

Für die Einbringung von Schmierfett in den Innenraum und die dort gegebenen Freiräume der oberen und unteren Lagerstelle 18 bzw. 19 weist jede von deren topfförmigen Hülsen 24 bzw. 25 im Zentrum ihres Bodens 26 bzw. 27 eine Vertiefung 55 bzw. 56, an der ein Schmiernippel ansetzbar ist, mit einer Durchgangsbohrung 57 bzw. 58 für die Durchleitung des Schmiermittels auf. Diese Schmiermitteleinbringung erfolgt wegen der Wartungsfreiheit der erfindungsgemäßen Lagerung nur einmalig nach Beendigung des Achsschenkelanbaus an den Achskörper 3. Die Vertiefungen 55, 56 werden anschließend durch Blindstopfen 59 bzw. 60 verschlossen.

## Patentansprüche

1. Vorderachse eines Lastkraftwagen oder Omnibus mit lenkbaren, nichtangetriebenen Rädern auf Achsschenkeln (2), die schwenkbar am Starrachskörper (3) angelenkt sind über Achsschenkelbolzen (4), von denen jeder mit seinem oberen und unteren Zapfenabschnitt (20, 21) über wenigstens ein Lager (22, 23) in einer Lagerbohrung (16, 17) des Achsschenkels (2) gelagert und mit seinem Mittelabschnitt (10) in eine achskörperinterne Bohrung (9) eingepaßt ist, wobei der Achskörper (3) jeweils endseitig oben und unten zueinander parallele Stützflächen (7, 8) aufweist, mit denen er im Maul (11) des Achsschenkels (2) in Bezug auf dort gegebene korrespondierende Gegenflächen (12, 13) axial abgestützt eingepaßt ist, **gekennzeichnet durch** eine wartungsfreie Achsschenkel-/Achsschenkelbolzenlagerung, bei der die untere Lagerstelle (19) ein insbesondere zweireihiges, von einer äußeren Hülse (25) umfaßtes Nadellager (23) aufweist, wobei die Hülse (25) in die betreffende Lagerbohrung (17) des Achsschenkels (2) eingepaßt ist, topfförmig ausgebildet ist, mit ihrem Boden (27) die benachbarte äußere Stirnfläche (29) des Achsschenkelbolzens (4) überdeckt und an ihrem dem Boden (27) gegenüberliegenden Ende eine Erweiterung (34) aufweist, mit deren Boden (33) sie axial an einer unteren Begrenzungsfläche (13) des Achsschenkel-Mauls (11) axial abgestützt ist und in deren Innenraum bodenseitig abgestützt ein Axialgleit- oder Axialrollenlager (31, 32) eingebaut ist, an dem gegebenenfalls unter Zwischenschaltung wenigstens einer Axialtoleranzen ausgleichenden Paßringscheibe (30) der Achskörper (3) mit seiner unteren Stützfläche (8) zum Achsschenkel (2) hin abgestützt ist, und daß der Innenraum der unteren Lagerstelle zum Achskörper (3) hin **durch** eine Gummilippendichtung (51) sowie eine zusätzliche Labyrinthdichtung abgedichtet ist, die **durch** eine mit Friktion auf der topfförmigen Hülse (25; 39) axial verschiebbar angeordnete und in eine achskörperseitige Ringnut (53) eintauchende Schiebemuffe (40) gebildet ist.

2. Vorderachse nach Anspruch 1, **dadurch gekennzeichnet, daß** die Hülse (25) der unteren Lagerstelle (18) aus zwei Teilen (39, 40) zusammengesetzt ist, wobei ein erstes, topfförmiges Teil (39) mit Boden (27), zylindrischer Wand (41) und Erweiterung (34) einstückig aus Stahlblech durch Tiefziehen hergestellt und - soweit notwendig - an bestimmten Stellen spanabhebend nachbearbeitet ist, und wobei das zweite Teil durch die bspw. aus Kunststoff, vorzugsweise jedoch ebenfalls durch Tiefziehen aus Stahlblech hergestellte Schiebemuffe (40) gebildet ist, die mit einem zylindrischen Führungsabschnitt (44) mit Friktion auf der zylindrischen Außenwand (42) der Erweiterung (34) des ersten Hülsen-Teils (39) sitzt und längs desselben axial verschiebbar ist.

3. Vorderachse nach Anspruch 1, **dadurch gekennzeichnet, daß** der obere freie Randbereich der Außenwand (42) der Erweiterung (34) am ersten topfförmigen Teil (39) der Hülse (25) von der Gummilippendichtung (51) umgriffen ist, die mit ihren Dichtlippen den Innenraum der Hülse (25) und das Axialgleit- oder -rollenlager (31, 32) zu der Paßringscheibe (30) oder der unteren Achskörper-Stützfläche (8) hin abdichtet.

4. Vorderachse nach den Ansprüchen 2 und 3, **dadurch gekennzeichnet, daß** der obere feie Endbereich des ersten topförmigen Teils (39) der Hülse (25) einschließlich der Gummilippendichtung (51) von der Schiebemuffe (40) übergriffen ist.

5. Vorderachse nach einem der vorhergehenden Ansprüche, **dadurch gekennzeichnet, daß** zur Realisierung der der unteren Lagerstelle (19) zugeordneten Labyrinthdichtung die Schiebemuffe (40) mit ihrem oberen Endabschnitt (61) in das Maul (11) des Achsschenkels (2) hinein verlängert ist und dabei in die die untere Achskörper-Stützfläche (8) hinterschneidende Ringnut (53) eintaucht, welche den oberen ringzylindrischen Randbereich (61) der Schiebemuffe (40) innen, außen und stirnseitig mit solchem Abstand übergreift, daß ein Ringkanal mit nach unten offenem U-Querschnitt verbleibt, der das dichtende Labyrinth bildet.

6. Vorderachse nach Anspruch 5, **dadurch gekennzeichnet, daß** an der Schiebemuffe (40) ein außen umlaufender Ringvorsprung (54) vorgesehen ist, der als Anschlag fungierend und mit der unteren Stützfläche (8) am Achskörper (3) zusammenwirkend die axiale Eintauchtiefe der Schiebemuffe (40) in die Ringnut (53) begrenzt.

7. Vorderachse nach Anspruch 1, **dadurch gekennzeichnet, daß** auch die die das vorzugsweise zweireihige Nadellager (22) der oberen Lagerstelle (18) umfassende, in die Bohrung (16) des Achsschenkels (2) eingepaßte Hülse (24) topfförmig ausgebildet und mit dem unteren Randbereich (37) ihrer zylindrischen Außenwand in das Maul (11) des Achsschenkels (2) hinein verlängert ist sowie dort in eine die obere Stützfläche (7) des Achskörpers (3) axial hinterschneidende Ringnut (38) eintaucht, die den unteren Randbereich (37) der topfförmigen Hülse (24) innen, außen und stirnseitig mit solchem Abstand umgibt, daß sich ein Ringkanal mit nach oben offenem U-Querschnitt ergibt, der ein dichtendes Labyrinth bildet.

8. Vorderachse nach Anspruch 1, **dadurch gekennzeichnet, daß** die topfförmige Hülse (24) der oberen Lagerstelle (18) zum Achskörper (3) hin durch eine mittels einer Metalleinlage armierte Gummilippendichtung (36) abgedichtet ist, die sich im Anschluß an die untere Reihe von Rollen des Nadellagers (22) mit ihren Dichtlippen dichtend an die zylindrische Innenfläche der Hülse (24), die Außenfläche des Achsschenkelbolzen-Abschnitts -Abschnitts (20) und die obere Achskörper-Stützfläche (7) anlegt.

9. Vorderachse nach Anspruch 7, **dadurch gekennzeichnet, daß** die topfförmige Hülse (24) der oberen Lagerstelle (18) durch ein einstückiges Tiefziehteil aus Stahlblech realisiert ist, das - soweit notwendig - an bestimmten Stellen spanabhebend nachbearbeitet ist.

10. Vorderachse nach Anspruch 1 und einem der Ansprüche 7 bis 9, **dadurch gekennzeichnet, daß** die topfförmige Hülse (24) der oberen Lagerstelle (18) und das topfförmige erste Teil (39) der Hülse (25) der unteren Lagerstelle (19) jeweils im Zentrum ihres Bodens (26, 27) eine eine kleine Durchgangsbohrung (57, 58) aufweisende Vertiefung (55, 56) besitzen, über die nach Beendigung der Achsmontage in den Innenraum der jeweiligen Lagerstelle (18, 19) Schmiermittel unter Druck einbringbar und die danach durch einen Blindstopfen (59, 60) verschließbar ist.

## Claims

1. Front axle of a motor-driven truck or omnibus with steerable, non-powered wheels on steering knuckles (2) carried on the rigid axle body (3) on pivoting kingpins (4) the top and bottom stubs (20, 21) of each of which are carried by at least one bearing (22, 23) in a bearing bore (16, 17) of the steering knuckle (2) and having a centre section (10) passing as a fit through an internal bore (9) in the axle body, the axle body (3) having supporting faces (7, 8) parallel to each other top and bottom at each end and fitting in such a way as to provide axial support in the mouth (11) of steering knuckle (2) against the corresponding mating faces (12, 13) of said mouth, **characterised in that** the steering knucklelkingpin bearing point is maintenance-free and the lower bearing point (19) evinces in particular a two-row needle bearing (23) enclosed by an outer sleeve (25), said sleeve (25) being fitted into the corresponding bearing bore (17) of the steering knuckle (2), being bowl-shaped in geometry, covering with its base (27) the adjacent outer end face (29) of the kingpin (4) and having at the end opposite its base (27) a projection (34), by the base (33) of which it is supported axially on a bottom limiting face (13) of the steering-knuckle mouth (11) and in the interior of which and supported on the base is fitted an axial plain bearing or axial roller bearing (31, 32), on which and with the inclusion, if applicable, of at least one shim (30) to compensate for axial tolerances, the axle body (3) is supported by its bottom supporting face (8) on the steering knuckle (2) and wherein the cavity in the lower bearing point is sealed against the axle body (3) by a rubber-lip sealing ring (51) and an additional controlled-gap labyrinth seal formed by a sliding sleeve (40) axially displaceable under the force of friction on the bowl-shaped sleeve (25; 39) and projecting on the axle-body side into an annular groove (53).

2. Front axle according to Claim 1, **characterised in that** the sleeve (25) of the lower bearing point (18) is a composite of two parts (39, 40), the first, bowl-shaped part (39) with base (27), cylindrical wall (41) and projection (34) being a one-piece deep-drawn sheet-steel part post-machined - insofar as necessary - in certain areas by chip-removal processes and the second part being the sliding sleeve (40) manufactured in plastic, for example, but preferably a deep-drawn sheet-steel part, and having a cylindrical guide section (44) seated by friction on the cylindrical outer wall (42) of the projection (34) of the first sleeve part (39) and being axially displaceable thereon.

3. Front axle according to Claim 1, **characterised in that** the upper free edge zone of the outer wall (42) of the projection (34) on the first, bowl-shaped part (39) of the sleeve (25) is enclosed around its circumference by the rubber-lip sealing ring (51), which, by means of its sealing lips, seals the inner cavity of the sleeve (25) and the axial plain bearing or axial roller bearing (31, 32) against the shim (30) or the bottom axle-body supporting face (8).

4. Front axle according to Claims 2 and 3, **characterised in that** the top free end zone of the first bowl-shaped part (39) of the sleeve (25) including the rubber-lip sealing ring (51) is enclosed by the sliding sleeve (40).

5. Front axle according to one of the preceding claims, **characterised in that** to realise the controlled-gap labyrinth seal allocated to the lower bearing point (19), the sliding sleeve (40) has a top end section (61) extended into the mouth (11) of the steering knuckle (2) and thereby projecting into the annular groove (53) back-cutting into the bottom axle-body supporting face (8) and enclosing the upper ring-cylindrical edge zone (61) of the sliding sleeve (40) on the inside, outside and at the end face with clearance such that an annular channel with an inverted U cross-section remains, said annular channel forming the sealing labyrinth.

6. Front axle according to Claim 5, **characterised in that** the sliding sleeve (40) has an external, circumferential annular protrusion (54) that acts as a stop and, together with the bottom supporting face (8) on the axle body (3), limits the extent of axial projection of the sliding sleeve (40) into the annular groove (53).

7. Front axle according to Claim 1, **characterised in that** the sleeve (24) fitted into the bore (16) of the steering knuckle (2) and enclosing the preferably two-row needle bearing (22) of the upper bearing point (18) is bowl-shaped in is geometry and the bottom edge zone (37) of its cylindrical outer wall is extended into the mouth (11) of the steering knuckle (2) and projects into an annular groove (38) back-cutting axially into the upper supporting face (7) of the axle body (3), and enclosing the bottom edge zone (37) of the bowl-shaped sleeve (24) on the inside, outside and at the end face with clearance such that an annular channel with U cross-section is formed, forming a sealing labyrinth.

8. Front axle according to Claim 1, **characterised in that** the bowl-shaped sleeve (24) of the upper bearing point (18) is sealed against the axle body (3) by a rubber-lip sealing ring (36) with metal-insert reinforcement and, contiguous to the bottom row of rollers of the needle bearing (22), is seated so that its sealing lips form a seal against the cylindrical inner face of the sleeve (24), the outer face of the kingpin stub (20) and the upper axle-body supporting face (7).

9. Front axle according to Claim 7, **characterised in that** the bowl-shaped sleeve (24) of the upper bearing point (18) is realised in the form of a one-piece deep-drawn sheet-steel part post-machined - insofar as necessary - in certain areas by chip-removal processes.

10. Front axle according to Claim 1 and one of Claims 7 to 9, **characterised in that** the bowl-shaped sleeve (24) of the upper bearing point (18) and the bowl-shaped first part (39) of the sleeve (25) of the lower bearing point (19) each have, centred in their base (26, 27) a recess (55, 56) evincing a small through-bore (57, 58) through which recesses (55, 56), once assembly of the axle is completed, lubricant can be forced under pressure into the cavity of the respective bearing point (18, 19) and which recess (55, 56) can then be sealed by insertion of a plug (59, 60).

## Revendications

1. Essieu avant d'un camion ou d'un autocar ou autobus à roues directrices non motrices sur fusées (2) articulées sur le corps d'essieu rigide (3) par l'intermédiaire de pivots (4), dont chacun est monté par ses tourillons supérieur et inférieur (20, 21) dans un alésage (16, 17) de la fusée (2) par l'intermédiaire d'au moins un coussinet (22, 23) et dont la partie médiane (10) est ajustée dans un alésage (9) interne au corps d'essieu (3), le corps d'essieu (3) présentant à ses extrémités supérieure et inférieure des portées parallèles (7, 8) par lesquelles il est ajusté en appui axial dans la mâchoire (11) de la fusée (2) par rapport à des portées associées (12, 13) disposées à ce niveau, **caractérisé par** un assemblage fusée/pivot ne nécessitant aucun entretien, dans lequel le palier inférieur (19) présente un coussinet à aiguilles (23), en particulier à double rangée d'aiguilles, emprisonné dans une douille extérieure (25), la douille (25) étant ajustée dans l'alésage considéré (17) de la fusée (2), ayant la forme d'un pot, recouvrant par son fond (27) la face frontale extérieure adjacente (29) du pivot (4) et présentant à son extrémité opposée au fond (27) une extension (34) par le fond (33) de laquelle elle s'appuie axialement sur une face de limitation inférieure (13) de la mâchoire (11) de la fusée et à l'intérieur de laquelle est ajusté en appui sur le fond un palier axial lisse ou à rouleaux (31, 32) sur lequel, le cas échéant avec intercalage d'au moins d'une rondelle de compensation des tolérances axiales (30), s'appuie le corps d'essieu (3) par sa portée inférieure (8) en direction de la fusée (2), et que l'intérieur du palier inférieur est rendu étanche, en direction du corps d'essieu (3), par un joint à lèvres en caoutchouc (51) ainsi que par un joint à labyrinthe additionnel constitué d'un manchon (40) pouvant coulisser axialement avec friction sur la douille en forme de pot (25, 39) et pénétrant dans une rainure annulaire (53) ménagée dans le corps d'essieu.

2. Essieu avant suivant la revendication 1, **caractérisé en ce que** la douille (25) du palier inférieur (19) est composée de deux parties (39, 40), une première partie en forme de pot (39), avec fond (27), paroi cylindrique (41) et extension (34), étant fabriquée d'un seul tenant par emboutissage de tôle d'acier et - si nécessaire - reprise par usinage en certains points, et la seconde partie étant constituée du manchon coulissant (40) fabriqué, par exemple, en matière plastique, mais de préférence également par emboutissage de tôle d'acier, ledit manchon étant monté avec friction, par une section de guidage cylindrique (44), sur la paroi extérieure cylindrique (42) de l'extension (34) de la première partie (39) de la douille et pouvant coulisser axialement le long de ladite section.

3. Essieu avant suivant la revendication 1, **caractérisé en ce que** le bord supérieur libre de la paroi extérieure (42) de l'extension (34) de la première partie en forme de pot (39) de la douille (25) est enveloppé par le joint à lèvres en caoutchouc (51) et que ce dernier assure par ses lèvres l'étanchéité de l'intérieur de la douille (25) et du palier axial lisse ou à rouleaux (31, 32) en direction de la rondelle (30) ou de la portée inférieure (8) du corps d'essieu.

4. Essieu avant suivant les revendications 2 et 3, **caractérisé en ce que** l'extrémité supérieure libre de la première partie en forme de pot (39) de la douille (25), y compris le joint à lèvres en caoutchouc (51), est enserrée par le manchon coulissant (40).

5. Essieu avant suivant l'une des revendications précédentes, **caractérisé en ce que** pour réaliser le joint à labyrinthe associé au palier inférieur (19), le manchon coulissant (40) se prolonge par son extrémité supérieure (61) dans la mâchoire (11) de la fusée (2) et y pénètre dans la rainure annulaire (53) dépouillant la portée inférieure (8) du corps d'essieu, ladite rainure enserrant à l'intérieur, à l'extérieur et en bout le bord supérieur cylindrique (61) du manchon coulissant (40) à une distance telle qu'il reste un canal annulaire à section en U ouverte vers le bas, qui constitue le labyrinthe assurant l'étanchéité.

6. Essieu avant suivant la revendication 5, **caractérisé en ce qu'**il est prévu sur le manchon coulissant (40) un épaulement annulaire périphérique (54) qui, servant de butée et coopérant avec la portée inférieure (8) du corps d'essieu (3), limite la profondeur de pénétration axiale du manchon coulissant (40) dans la rainure annulaire (53).

7. Essieu avant suivant la revendication 1, **caractérisé en ce que** la douille (24) ajustée dans l'alésage (16) de la fusée (2), enveloppant le coussinet à aiguilles (22), de préférence à double rangée d'aiguilles, du palier supérieur (18), est, elle aussi, en forme de pot et qu'elle se prolonge par le bord inférieur (37) de sa paroi extérieure cylindrique dans la mâchoire (11) de la fusée (2) et y pénètre dans une rainure annulaire (38) dépouillant axialement la portée supérieure (7) du corps d'essieu (3), ladite rainure enserrant à l'intérieur, à l'extérieur et en bout le bord inférieur (37) de la douille en forme de pot (24) à une distance telle qu'il reste un canal annulaire à section en U ouverte vers le haut, qui constitue un labyrinthe assurant l'étanchéité.

8. Essieu avant suivant la revendication 1, **caractérisé en ce que** la douille en forme de pot (24) du palier supérieur (18) est rendue étanche, en direction du corps d'essieu (3), par un joint à lèvres en caoutchouc à armature métallique (36), dont les lèvres s'appliquent, en assurant l'étanchéité, sous la seconde rangée d'aiguilles du coussinet (22), sur la surface intérieure cylindrique de la douille (24), sur la surface extérieure du tourillon (20) du pivot et sur la portée supérieure (7) du corps d'essieu.

9. Essieu avant suivant la revendication 7, **caractérisé en ce que** la douille en forme de pot (24) du palier supérieur (18) est réalisée sous forme de pièce emboutie en tôle d'acier d'un seul tenant, reprise - si nécessaire - par usinage en certains points.

10. Essieu avant suivant la revendication 1 et l'une des revendications 7 à 9, **caractérisé en ce que** la douille en forme de pot (24) du palier supérieur (18) et la première partie en forme de pot (39) de la douille (25) du palier inférieur (19) possèdent au centre de leur fond (26, 27) un renfoncement (55, 56) présentant un petit trou débouchant (57, 58) par lequel du lubrifiant peut être introduit sous pression à l'intérieur du palier considéré (18, 19) à l'issue du montage de l'essieu et qui est ensuite obturable par un bouchon borgne (59, 60).
